**Europäisches Patentamt**

(19) **European Patent Office**

**Office européen des brevets**

(11) Publication number: **0 169 173**
**B1**

(12) **EUROPEAN PATENT SPECIFICATION**

(45) Date of publication of patent specification: **04.01.89**

(21) Application number: **85830122.9**

(22) Date of filing: **24.05.85**

(51) Int. Cl.⁴: **F 16 B 13/12**

(54) **Expansion plug of improved type.**

(30) Priority: **25.05.84 IT 2191984 u**

(43) Date of publication of application:
**22.01.86 Bulletin 86/04**

(45) Publication of the grant of the patent:
**04.01.89 Bulletin 89/01**

(84) Designated Contracting States:
**AT BE CH DE FR GB LI NL SE**

(56) References cited:
**DE-A-2 840 087**
**US-A-3 842 877**
**US-A-3 855 895**

(73) Proprietor: **GIA S.r.l.**
**Via Silvio Pellico, 34 ·**
**I-28069 Trecate (Novara) (IT)**

(72) Inventor: **Guaglio, Antonio**
**Via Trieste, 23**
**Trecate (Novara) (IT)**

(74) Representative: **Cicogna, Franco**
**Ufficio Internazionale Brevetti Dott.Prof. Franco**
**Cicogna Via Visconti di Modrone, 14/A**
**I-20122 Milano (IT)**

Courier Press, Leamington Spa, England.

**EP 0 169 173 B1**

## Description

The present invention relates to an expansion plug according to the first portion of Claim 1.

As is known, to fix hooks or supports to a wall, expansion plugs are usually utilized.

It is likewise known that these latter are formed substantially by a small tube which is introduced into a hole of suitable diameter preliminarily formed in the wall; this tube is then deformed in a radial sense by means of the insertion and screwing into its interior of a screw or a threaded shank.

In particular, for a correct fixation of the hook or support, the threaded part of these must be screwed to the bottom of the deformable plug, with an operation which obviously requires a certain consumption of time.

An equal consumption of time is likewise required whenever it is intended to remove the said elements from these plugs.

For example the DE—A—2 840 087 discloses an expansion plug, comprising a tubular element provided with a longitudinal slot and having a hollow interior with a rectangular cross section with generally parallel major sides, and a generally rod-shaped support member, a shank of which is co-operatively engageable in the interior of the tubular element. In this plug, for the proper fixation of the hook of support, the shank is to be deeply inserted in the tubular element with a comparatively great force.

The US—A—3 842 877 moreover discloses a quick fastening screw device comprising an elongated screw having a shank with threaded sectors alternating with flat surfaces. The screw cooperates with a tubular member with a threaded bore. Further, the bore comprises longitudinal grooves which cooperates with the threaded sectors of the screw such that the screw can directly be inserted into the bore.

The problem of the present invention is that of eliminating the inconveniences complained of above providing an improved expansion plug by means of which a hook or support can be fixed to a wall by means of a partial rotation of its shank.

Within the scope of the above mentioned problem, a particular problem of the present invention is that of providing an improved expansion plug which is structurally and constructionally simple and, therefore, of restricted cost.

Another problem of the present invention is that of providing an improved expansion plug which is easy to use and reliably secure.

The present invention solves the above problems by providing an expansion plug as indicated above with all the features of the characterizing portion of Claim 1.

Advantageous embodiments of the invention are featured in the dependent claims 2 to 4.

Further characteristics and advantages of the expansion plug will be better understood with the aid of the following description and the various figures of the drawings, in which:

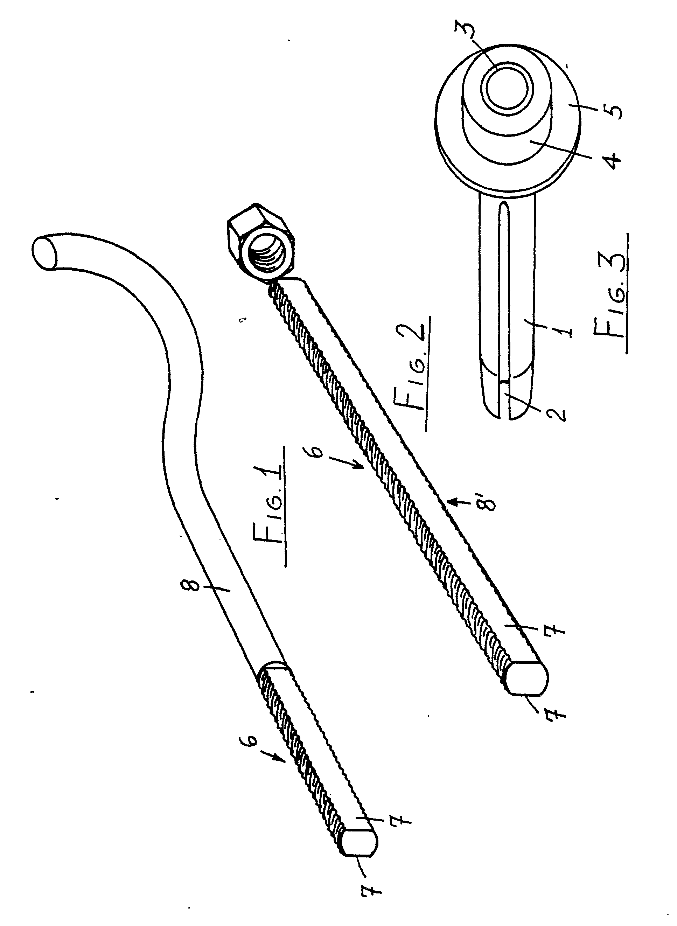

Figures 1 and 2 illustrate two support members provided, respectively, with a curved end in the form of a hook and a threaded end, which have a shank having an oblong transverse section;

Figure 3 is a view of the tubular element with which the said members co-operate;

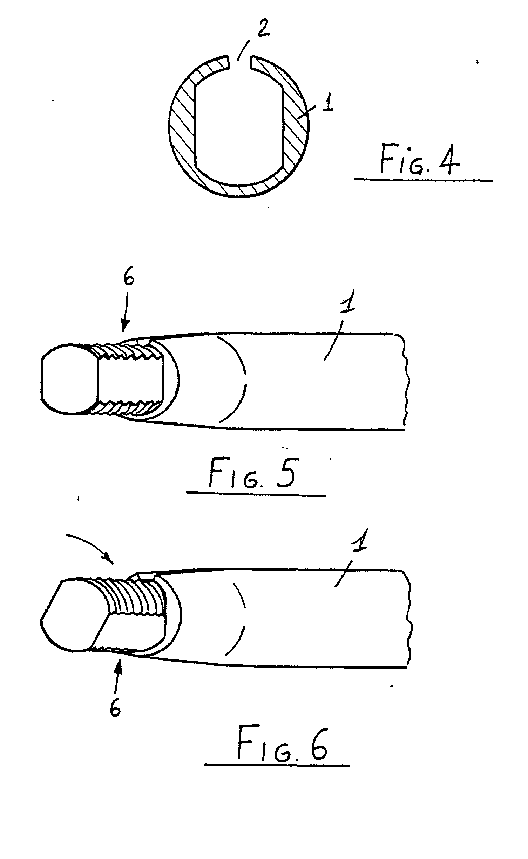

Figure 4 is a transverse section of such a tubular element;

Figures 5 and 6 are perspective views of a portion of one of the said support members, with a schematic indication of the manner of operation for fixing it to the interior of the said tubular element; and

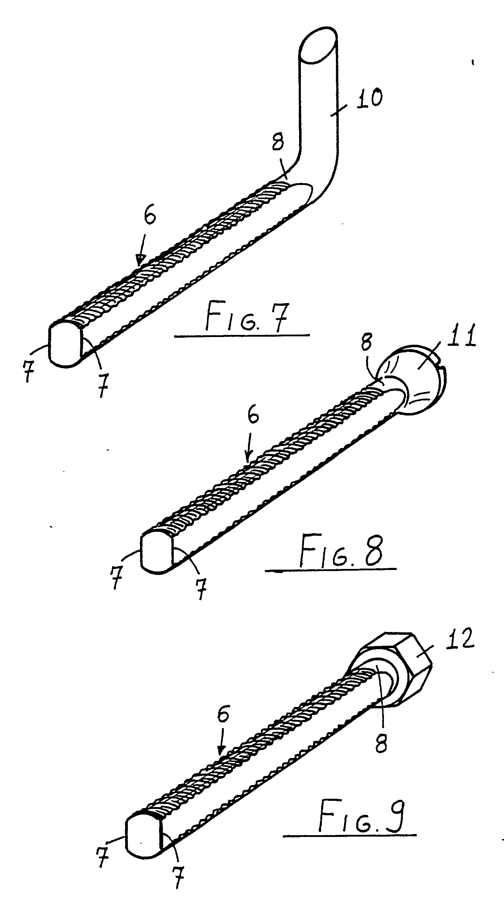

Figures 7, 8 and 9 show the same fixing member, as is indicated in Figure 1, but with, respectively, a hook end, a cylindrical head, and a polygonal head.

With particular reference now to the various figures of the attached drawings, the improved expansion plug in question comprises a tubular element 1 provided with a longitudinal slot 2 having, close to one end, a projecting thrust collar 3 against which engages a fixing sleeve 4 provided, as shown, with a flanged portion 5.

In particular this tubular element has a generally rectangular internal section with parallel major sides disposed in such a way that the said longitudinal slot 2 opens along the central portion of one of the minor sides.

With the said tubular element co-operates a threaded shank 6 which is also made generally rectangular by means of a suitable removal from a round bar, of material along two diametrically opposite portions 7.

In practice, by inserting this shank to the bottom of the tubular element and rotating it by one quarter of a revolution, a stable fixing between the two pieces is obtained.

This operation, in fact, as well as performing a compression action of the all of the tubular element against the wall of the hole in which it is inserted is also able to cause a self threading of the internal wall of the tubular element itself.

Obviously, the said threaded and worked shank can constitute the end portion of a round bar 8, which may be curved at the other end in the form of a hook, or provided with a cylindrical or hexagonal head or the like, or can be constituted by a suitably threaded bar 8'.

From what has been explained above and from observation of the various figures of the attached drawings, the great functionality and practicality in use which characterises the improved expansion plug constituting the subject of the present utility model will be evident. In particular, as shown in the drawings, the smaller sides of the generally rectangular cross section of both the interior of the tube and the shank of the insert may be rounded to facilitate turning the shank within the tube.

## Claims

1. Expansion plug comprising a tubular element (1) provided with a longitudinal slot (2) and having a hollow interior with a substantially rectangular cross-section with generally parallel major sides, and a generally rod-shaped support member (8), a shank (6) of which is cooperatively engageable in the interior of the tubular element (1), characterized in that said shank (6) is of substantially the same cross-sectional shape as the interior of the tubular element (1) and has a screw thread or grooves formed on its two smaller sides.

2. Expansion plug according to claim 1, characterized in that said tubular element (1) has, at one end, a projecting thrust collar (3) against which engages a fixing sleeve (4) provided, preferably, with a flanged portion (5).

3. Expansion plug according to any one of the preceding claims, characterized in that the major sides or the interior cross section of the said tubular element (1) are disposed in such a way that said longitudinal slot (2) opens in correspondence with the central portion of one of the minor sides of the cross section.

4. Expansion plug according to any one of the preceding claims, characterized in that said shank (6) of said rod-shaped support member (8) is formed to a generally rectangular shape by means of a suitable removal of material along two of its diametrically opposed portions.

**Patentansprüche**

1. Spreizdübel aufnehmend einen röhrenförmige Element (1), das mit einer Längsnute (2) versehen ist, und eine hole Innenaufnahme versehend, die einen mit gewöhnlich paralleler grösserer Seiten wesentlich rechtwinklige Querschnitt hat, und ein wesentlich stangenförmiges Stützglied (8) deren Schaft (6) in den röhrenformige Element mitwirkend eingeklemmt ist; dadurch gekennzeichnet, daß der obengenannte Schaft (6) einen als die Innenaufnahme des rohrenförmigen Elementes (1) wesentliche Querschnitt und eine Schraubengewinde oder Rinnen über seinen zweien kleineren Seiten hat.

2. Spreizdübel nach Anspruch 1, dadurch gekennzeichnet, daß das röhrenförmige Element (1) an einer Ende mit einem eine Spannhülse (4) entgegenwirkend vorspringenden Drucklager (3) versehen ist, wobei die Spannhülse (4) einen angeflanschte Teil hat.

3. Spreizdübel nach jeden vorliegenden Ansprüche, dadurch gekennzeichnet, daß die größere Seiten des inneren Querschnitt des obengenannten röhrenförmigen Elementes (1) so angeordnet sind, daß die obengenannte Längsnute (2) entsprechend dem Mittelteil einer kleineren Seiten des Querschnittes mündet.

4. Spreizdübel nach jeden vorliegenden Ansprüche, dadurch gekennzeichnet, daß der obengenannte Schaft (6) des obengenannten stangenförmigen Stützglied (8), mittels einer längs zweien seinen entgegenstehenden Teilen geeigneten Stoffentnehmung, wesentlich rechtwinklig geformt ist.

**Revendications**

1. Cheville d'expansion comprenant un élément tubulaire (1) pourvu d'une fente longitudinale (2) et ayant un intérieur creux avec une section transversale sensiblement rectangulaire avec les côtés plus grands généralement parallèles, et un élément support (8) généralement à forme de tige, une portion (6) dudit élément support étant apte à s'engager par coopération dans l'intérieur dudit élément tubulaire (1), caractérisée en ce que ladite portion (6) a sensiblement la même forme de la section transversale que l'intérieur dudit élément tubulaire (1) et est pourvue d'un filet ou de gorges formés sur son côtés plus petits.

2. Cheville d'expansion selon la revendication 1, caractérisée en ce que ledit élément tubulaire est pourvu, en correspondance d'une extrémité, d'un collier de poussée saillant (3) contre lequel s'engage un manchon de fixation (4) pourvu, préférablement, d'une portion à flasque (5).

3. Cheville d'expansion selon une quelconque des revendications précédentes, caractérisée en ce que les côtés plus grands de la section transversale intérieure dudit élément tubulaire (1) sont disposés de telle manière que ladite fente longitudinale (2) s'ouvrit en correspondance de la portion centrale d'un des côtés plus petits de la section transversale.

4. Cheville d'expansion selon l'une quelconque des revendications précédentes, caractérisée en ce que ladite portion (6) dudit élément support à tige (8) est formée avec une forme généralement rectangulaire par un enlevement convenable de matière le long de deux ses parties diametralement opposées.

FIG. 1

FIG. 2

FIG. 3

EP 0 169 173 B1

2

Fig. 4

Fig. 5

Fig. 6

Fig. 7

Fig. 8

Fig. 9